# FASCICULE DE BREVET EUROPEEN

(11) **EP 1 908 267 B1**
(45) Date de publication et mention de la délivrance du brevet: **04.04.2018**
(21) Numéro de dépôt: 06794204.5
(22) Date de dépôt: 24.07.2006
(51) Int. Cl.: H04M 3/36, H04M 3/22, H04W 12/02, H04L 29/06

(54) **DISPOSITIF D'INTERCEPTION ET D'ANALYSE DE TRAFIC POUR TERMINAL**
VORRICHTUNG ZUM ABFANGEN UND ANALYSIEREN VON DATENVERKEHR FÜR EIN ENDGERÄT
DEVICE FOR INTERCEPTING AND ANALYZING TRAFFIC FOR A TERMINAL

(30) Priorité: 26.07.2005 FR 0507976
(43) Date de publication de la demande: 09.04.2008
(73) Titulaire: Orange, 75015 Paris (FR)
(72) Inventeur: RIVERA, Thomas, F-75015 Paris (FR); MATHOORASING, Dean, F-92130 Issy les Moulineaux (FR)
(74) Mandataire: Delumeau, François Guy
(86) Numéro de dépôt international: PCT/FR2006/001804
(87) Numéro de publication internationale: WO 2007/012745

(56) Documents cités:
- KR-A- 20040 052 015
- US-A1- 2003 157 895
- US-A1- 2005 249 125
- FLUKE NETWORKS: "Etherscope Network Assistant" INTERNET PUBLICATION, [Online] 22 novembre 2004 (2004-11-22), pages 1-3, XP002378731 Extrait de l'Internet: URL:http://web.archive.org/web/20041122034 859/http://www.flukenetworks.com/us/LAN/Ha ndheld+Testers/EtherScope/Features/Analyze +Traffic.htm> [extrait le 2006-04-13]

## Description

La présente invention concerne le domaine des télécommunications. Elle se rapporte plus particulièrement à un dispositif d'interception et d'analyse de trafic pour des terminaux connectés à un réseau de télécommunication, selon une technologie sans fil, utilisant par exemple la norme de télécommunication IEEE 802.11 et ses évolutions, plus communément dénommées Wifi (pour « Wireless Fidelity »), ou encore la norme basée sur le standard de transmission radio IEEE 802.16, connue sous l'appellation Wimax.

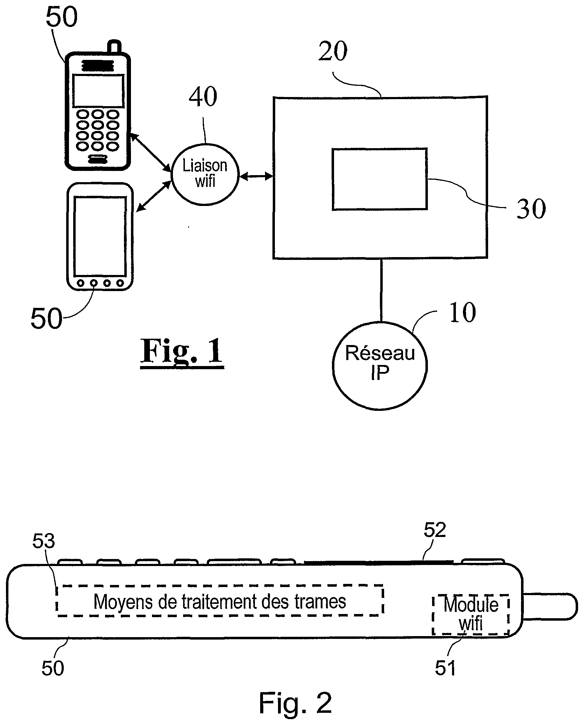

L'invention, en référence à la figure 1, se situe dans le contexte du déploiement prochain de nouveaux réseaux mobiles sans fil, notamment Wifi, basés sur un accès partagé à un réseau IP 10 entre plusieurs utilisateurs au travers d'un modem xDSL 20 d'un abonné, typiquement un modem ADSL (pour « Asymmetric Digital Subscriber line » en anglais), intégrant une borne Wifi 30 comprenant un routeur Wifi couplé à une antenne. En effet, lorsque suffisamment d'abonnés seront équipés de tels modems intégrant la borne Wifi et le modem ADSL, on pourra envisager de déployer des réseaux mobiles Wifi en allouant une partie de la bande passante associée à chaque modem à l'hébergeur du modem et une autre partie aux différents utilisateurs potentiels. Chaque utilisateur, connecté par liaison Wifi 40 à la borne par l'intermédiaire d'un terminal mobile 50 de type PDA (« Personnal Digital Assistant » en anglais) ou téléphone mobile intelligent équipé d'un module de liaison Wifi, aura alors accès au réseau IP auquel est raccordée ladite borne radio et pourra mettre en oeuvre différents services sur le réseau tels que navigation Internet, voix sur IP, lecture temps réel de fichier diffusé en continu (« streaming » en anglais), et autres services selon d'autres protocoles de communication du même type.

Dans un tel contexte, l'utilisateur, avant de solliciter un service sur le réseau, aura alors besoin de savoir s'il dispose de suffisamment de bande passante allouée pour pouvoir initier le service souhaité. Il devrait donc idéalement pouvoir disposer d'informations permettant de caractériser de manière dynamique sa connexion au réseau, notamment afin de pouvoir identifier à tout instant les différents services en cours, leur débit associé sur le lien radio, ainsi que le débit maximum qui lui est alloué.

L'accès par l'utilisateur à de telles informations liées aux caractéristiques de la liaison réseau qu'il a établie est donc primordial dans ces nouveaux réseaux Wifi, pour permettre au client de mieux gérer sa connexion radio et les différents services qu'il souhaite mettre en oeuvre en fonction de la bande passante qui lui a été allouée.

Il existe dans l'état de la technique, des modules logiciels pour terminaux mobiles de type PDA, permettant d'effectuer la détection de bornes Wifi. Un tel dispositif est décrit sur le Web à l'adresse http://pocketwarrior.sourceforge.net. Cependant, il n'existe pas de dispositif pour PDA susceptible de caractériser précisément la connexion du client et qui soit capable par exemple d'intercepter et d'analyser dynamiquement le trafic radio en vue d'identifier les différents protocoles mis en oeuvre.

Des dispositifs d'interception et d'analyse de trafic associé à une interface permettant la caractérisation des connexions réseaux sont par contre connus dans le domaine du PC. Il existe de tels modules logiciels dans pratiquement tous les systèmes d'exploitation pour PC. Par exemple, les informations délivrées par le système d'exploitation Windows XP pour une connexion client/serveur établie sont les suivantes : durée de la connexion depuis l'établissement de celle-ci, débit maximum possible du lien, nombre de paquets de données reçus et envoyés, adresse IP, masque de sous-réseau et passerelle par défaut, etc.

De manière générale, les informations caractérisant une connexion réseau, qui sont mises à disposition par les systèmes d'exploitation, concernent essentiellement les volumes échangés et la durée de la connexion. Ces utilitaires ne sont de toute façon pas présents sur les terminaux mobiles de type PDA, principalement du fait que les systèmes d'exploitation embarqués sont fortement allégés.

Par ailleurs, quand on désire obtenir des informations plus fines sur les caractéristiques de la connexion, qui soient susceptibles par exemple de fournir une identification des différents protocoles mis en oeuvre, cela conduit à des solutions complexes pour un client et extrêmement consommatrices en terme de ressources de calcul et de mémoire et de ce fait, encore plus inadaptées dans un environnement allégé tel qu'offert par les terminaux mobiles de type PDA ou téléphones intelligents. Ces solutions ont en fait plutôt été développées pour les administrateurs de réseaux ou les ingénieurs désirant réaliser des tests de charge ou l'analyse de trafic et ne sont pas transposables au monde de l'embarqué. Par exemple, on peut citer un outil comme Ethereal (http://wwww.ethereal.com), qui est un analyseur de protocoles du type précité.

La publication Internet de Fluke Networks intitulé « EtherScope™ Network Assistant » extraite du site http://web.archive.org/web/20041122034859/http://www.fl ukenetworks.com/us/LAN/Handheld+Testers/Etherscope/Feat ures/Analyze+Traffic.htm, décrit un outil permettant de détecter des problèmes sur un réseau.

Le document KR 2004 0052015 A décrit un système de mesure réseau et un procédé d'analyse du trafic réseau.

Le document US 2003/0157895 décrit un dispositif portatif permettant de surveiller dynamiquement le trafic sur un réseau.

La présente invention a pour but de remédier à ces inconvénients en proposant un dispositif de caractérisation de trafic adapté pour terminaux embarqués, permettant notamment à un client de visualiser en temps réel l'état de sa connexion sans fil et notamment d'identifier les différents services mis en oeuvre et ce, avec le minimum d'impact sur les ressources de l'équipement de l'utilisateur.

Avec cet objectif en vue, l'invention a pour objet un terminal comprenant des moyens de connexion et d'émission/réception avec au moins un réseau de télécommunication, des moyens pour exécuter au moins un service sur ledit réseau selon au moins un protocole de communication et une interface utilisateur graphique, caractérisé en ce qu'il comprend:
- des moyens d'interception et de mémorisation des trames de données échangées sur le réseau par ledit terminal dans le cadre de services en cours d'exécution,
- des moyens d'analyse desdites trames mémorisées pour en déduire des paramètres de caractérisation de la connexion dudit terminal au réseau, comprenant des moyens d'identification des différents services mis en oeuvre et leur débit instantané associé, et
- des moyens de visualisation en temps réel desdits paramètres de caractérisation de la connexion au travers de ladite interface utilisateur graphique.

Avantageusement, un tri est réalisé pour déterminer si les trames interceptées relèvent d'une application temps réel ou non temps réel. Pour ce faire, les moyens d'analyse des trames de données mémorisées comprennent des moyens pour distribuer les trames en fonction de leur type de protocole, temps réel ou non temps réel.

Avantageusement, les moyens d'analyse des trames de données mémorisées comprennent encore des moyens pour comptabiliser le nombre de trames se rapportant à des services temps réel et le nombre de trames se rapportant à des services non temps réel. Ainsi, les paramètres de caractérisation se rapportant au débit associé à chaque service identifié temps réel et non temps réel, peuvent être déterminés aisément.

De préférence, les moyens de visualisation comprennent des moyens d'affichage des paramètres de caractérisation par service identifié. Un tel affichage par service mis en oeuvre offre à l'utilisateur une caractérisation fine de l'état de sa connexion à tout instant.

Selon un mode de réalisation, les moyens d'interception et d'analyse des trames de données comprennent un pilote logiciel NDIS de type protocole, prévu pour coopérer avec les moyens de connexion et d'émission/réception du terminal avec le réseau de télécommunication.

L'invention concerne encore un procédé de caractérisation de la connexion d'un terminal avec un réseau de télécommunication, ledit terminal comprenant des moyens pour exécuter au moins un service sur ledit réseau selon au moins un protocole de communication, ledit procédé étant caractérisé en ce qu'il comprend des étapes de:
- interception des trames de données échangées sur le réseau par ledit terminal dans le cadre de services en cours d'exécution,
- mémorisation desdites trames interceptées,
- analyse desdites trames mémorisées pour en déduire des paramètres de caractérisation de la connexion comprenant l'identification des différents services mis en oeuvre et leur débit instantané associé, et
- visualisation en temps réel desdits paramètres de caractérisation de la connexion au travers d'une interface utilisateur graphique.

Avantageusement, l'étape d'analyse comporte une distribution des trames interceptées et mémorisées en fonction de leur type de protocole, temps réel ou non temps réel, et une comptabilisation du nombre de trames se rapportant à des services temps réel et du nombre de trames se rapportant à des services non temps réel.

L'invention concerne également un programme d'ordinateur comprenant des instructions de code de programme pour l'exécution des étapes du procédé selon l'invention destinées à être exécutées par un terminal, lorsque ledit programme est exécuté sur le terminal.

Selon un mode de réalisation, le programme d'ordinateur selon l'invention est implémenté sous la forme d'un pilote NDIS de type protocole, prévu pour coopérer avec une carte réseau intégrée au terminal.

Enfin, l'invention concerne un support d'enregistrement lisible par un terminal sur lequel est enregistré le programme selon l'invention.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre schématiquement un contexte d'application de la présente invention et a déjà été décrite,
- la figure 2 décrit un terminal mobile doté des moyens de mise en oeuvre de la présente invention,
- la figure 3 est un organigramme illustrant les principales étapes de l'algorithme mettant en oeuvre l'invention, et
- la figure 4 illustre un exemple d'interface utilisateur graphique obtenue selon l'invention.

L'invention vise donc à mettre à disposition d'un terminal mobile 50, tel que représenté à la figure 2, connecté à un réseau de télécommunication par l'intermédiaire d'un module de liaison sans fil 51, un ensemble d'informations permettant à l'utilisateur de caractériser de façon très complète la connexion établie entre le terminal et le réseau et notamment, de caractériser les différents services de communication mis en oeuvre ainsi que leur débit associé sur le lien radio. Le module de liaison sans fil 51, permettant d'assurer la connexion et l'émission/réception de trames de données du terminal mobile avec le réseau de télécommunication, est par exemple constitué d'une carte réseau de type Wifi et de son gestionnaire logiciel associé.

Pour ce faire, le terminal mobile comprend des moyens de traitement 53 spécifiques, intégrant une interface utilisateur graphique prévue pour être affichée sur l'écran 52 du terminal mobile et présentant des fonctionnalités bien précises, qui seront décrites plus en détail ci-après, permettant avantageusement à l'utilisateur de mieux gérer sa connexion radio ainsi que la bande passante qui lui a été allouée.

Pour ce faire, les moyens de traitement 53 implémentent tout d'abord des moyens d'interception et de mémorisation des trames de données échangées sur le réseau par le terminal dans le cadre des services qu'il a demandés et qui sont en cours d'exécution. Les moyens de traitement comprennent également des moyens d'analyse des trames préalablement mémorisées permettant d'en déduire des paramètres de caractérisation de la connexion du terminal au réseau, se rapportant principalement à une identification des différents protocoles de communication mis en oeuvre et leur débit instantané associé. Enfin, les moyens de traitement implémentent des moyens de visualisation en temps réel de ces paramètres de caractérisation de la connexion au travers de l'interface utilisateur graphique.

Les moyens de traitement permettent donc dans un premier temps d'intercepter le trafic échangé en voie montante et descendante, puis de mémoriser ces données pour les analyser en vue d'en déduire des paramètres utiles pour l'utilisateur : débit instantané par application, débit global, etc.

Les moyens de traitement sont constitués d'un module logiciel, qui, selon un exemple de réalisation, est développé en s'appuyant sur la plateforme dotNet (langage développé par la société Microsoft), ayant pour avantage la mise en oeuvre d'outils et d'API ("Application Program Interface" en anglais) compatibles avec tous types de terminaux (PDA, téléphone intelligent, PC). Le choix de dotNet implique donc une implémentation dans un environnement Windows, par contre l'interface utilisateur graphique associée aux moyens d'interception et d'analyse de trafic peut tout à fait être développée pour des terminaux fonctionnant sous d'autres systèmes d'exploitation.

La démarche adoptée est de court-circuiter la pile de protocoles de communication réseau, appelée pile TCP/IP, afin d'avoir un accès direct et total au niveau des paquets IP. Malheureusement, le système d'exploitation allégé Windows CE, destiné aux terminaux embarqués de type téléphones portables, ordinateurs de poche..., n'implémente pas cette possibilité. Pour contrer cette impossibilité, il est donc nécessaire de descendre plus bas dans les couches OSI, et ceci grâce au standard NDIS (pour « Network driver Interface Spécification » en anglais).

En effet, lorsqu'une application désire communiquer avec une autre application en passant par une interface réseau, les messages envoyés par cette application passent obligatoirement par les interfaces TDI (pour « Transport Data Interface » en anglais) et NDIS.

Le modèle OSI, qui décompose les différents protocoles d'une pile en 7 couches, peut être utilisé pour décrire la suite de protocoles Internet. Dans une pile de protocoles, chaque couche résout un certain nombre de problèmes relatifs à la transmission de données, et fournit des services bien définis aux couches supérieures. Les couches hautes sont plus proches de l'utilisateur et gèrent des données plus abstraites, en utilisant les services des couches basses qui mettent en forme ces données afin qu'elles puissent être émises sur le lien physique.

La norme Wifi s'attache à définir les couches basses du modèle OSI pour une liaison sans fil, c'est-à-dire la couche physique et la couche liaison de données, laquelle est constituée de deux sous-couches : le contrôle de la liaison logique et le contrôle d'accès au support ou couche MAC. La couche liaison de données définit en fait l'interface avec la carte réseau Wifi et le partage du lien de transmission. La carte réseau réalise quant à elle l'interface entre la couche physique et le réseau et sa fonction est de préparer, d'envoyer et de contrôler les données sur le réseau.

Les gestionnaires de périphérique pour les sous-couches de la couche liaison de données déplacent donc des données reçues dans la couche physique par la carte réseau et les transmettent aux autres couches du modèle OSI. Un gestionnaire MAC ou gestionnaire de carte réseau, est ainsi un gestionnaire de périphériques situé dans la sous-couche MAC, fournissant un accès de bas niveau aux cartes réseau. L'interface NDIS fournit quant à elle un ensemble de fonctions génériques permettant d'être indépendant du type de la carte réseau. Il s'agit en fait d'un standard définissant une interface pour la communication entre la couche MAC et les protocoles de communication réseau. NDIS définit donc l'interface logicielle utilisée par les protocoles de communication réseau pour communiquer avec la carte réseau et est située entre les pilotes de protocole NDIS et les gestionnaires d'équipements réseaux (pilote Ethernet, Wifi...). L'interface de programmation ainsi conçue autorise l'utilisation d'une même configuration matérielle avec plusieurs protocoles de communication réseau.

Pour avoir la visibilité sur les paquets IP échangés par un équipement réseau et ainsi réaliser la fonction d'interception des trames de données échangées sur le réseau par le terminal dans le cadre des services en cours d'exécution, il est donc nécessaire de disposer d'un pilote logiciel NDIS de type protocole dédié à cette fonction et situé au-dessus des gestionnaires de cartes réseau. Le principe de fonctionnement du pilote logiciel NDIS de type protocole est de s'enregistrer auprès d'une ou plusieurs cartes réseaux via un processus appelé « binding » (lien), utilisé pour établir le canal de communication initiale entre le gestionnaire de protocole et le gestionnaire de la carte réseau. Le pilote logiciel NDIS de type protocole est donc utilisé pour relier les gestionnaires de cartes réseaux et ceux des protocoles de communication et permet d'indiquer le type de paquets souhaités.

Pour ce qui est du traitement des informations provenant du pilote logiciel NDIS de type protocole, une méthode consiste en la mémorisation des trames de données interceptées afin de perdre le moins de trames possibles, puis en la distribution des trames en fonction de leur type de protocole, temps réel ou non temps réel, leur comptage, leur affichage au travers de l'interface utilisateur graphique et enfin le vidage de la mémoire.

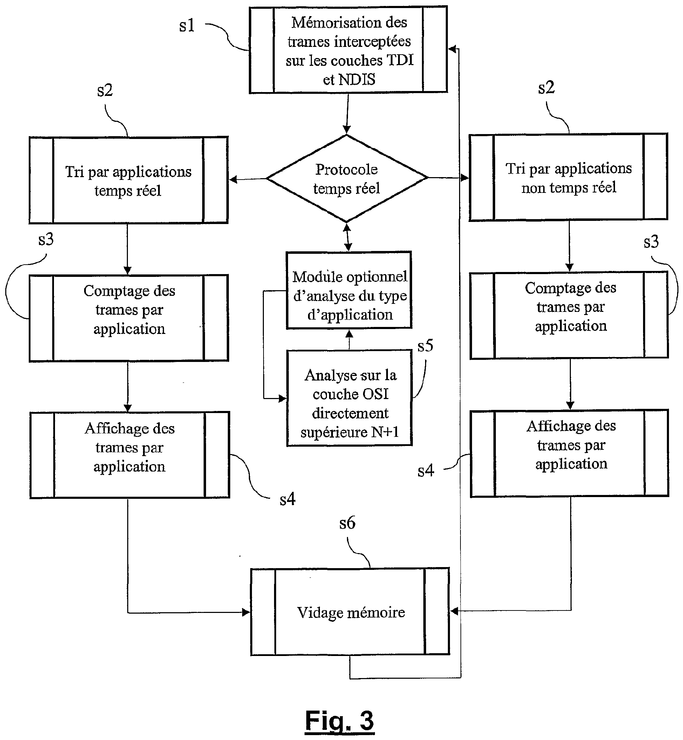

Cette méthode est basée sur l'algorithme de la figure 3, illustrant l'enchaînement des séquences décrites ci-dessus. Dans un premier temps, les trames sont donc interceptées et enregistrées en s1 dans une mémoire tampon du terminal. Un premier tri en s2 est ensuite réalisé pour déterminer si la trame interceptée relève d'une application temps réel ou non temps réel. Ce tri est plus ou moins difficile à réaliser selon les applications. Aussi, un module optionnel d'analyse du type d'application peut être prévu, qui permet de lever l'incertitude en ce qui concerne le caractère temps réel ou non temps réel de l'application. Une analyse s5 récurrente et ascendante en terme de couches OSI (de la couche basse vers la couche applicative) permet au module d'identifier le caractère temps réel ou non temps réel de la trame interceptée mais non encore comptabilisée. Cette analyse s'interrompt d'elle-même quand l'information a été obtenue et la trame est aiguillée vers la branche correspondante de l'algorithme. Les deux branches de l'algorithme possède la même structure : un tri des trames interceptées par application temps réel ou non temps réel, un comptage en s3 des trames par application permettant l'identification des débits associés aux différentes applications et enfin un affichage, au travers de l'interface utilisateur graphique, en s4, des différents paramètres obtenus de caractérisation de la connexion réseau concernant l'identification des différents services mis en oeuvre et leur débit instantané associé. Pour finir, un vidage de la mémoire tampon est effectué en s6.

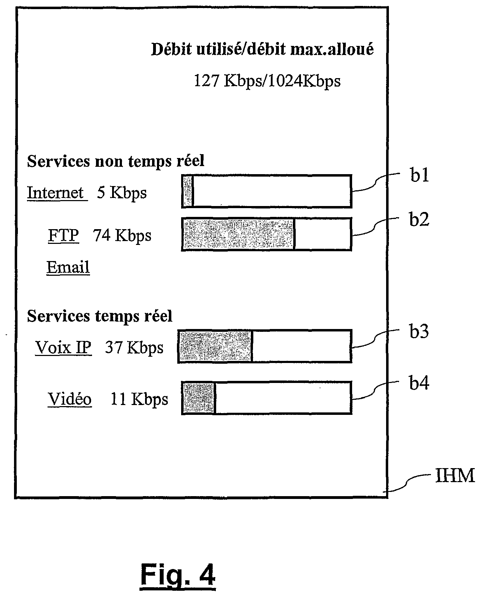

Le module logiciel selon l'invention met donc en oeuvre les éléments d'interface utilisateur graphique, permettant à l'utilisateur de visualiser en temps réel les paramètres de caractérisation de la connexion du terminal mobile au réseau. Un exemple d'une telle interface est représenté à la figure 4. Selon cet exemple, les paramètres de caractérisation de la connexion sont affichés au travers de l'interface utilisateur graphique IHM sous forme de barres-graphes b1 à b4, donnant chacune des valeurs représentatives du débit associé aux différents services mis en oeuvre, à savoir selon cet exemple, les débits courants associés aux services suivants, respectivement non temps réel et temps réel : Internet et FTP, voix sur IP et vidéo. Ces informations permettent également d'afficher le débit courant utilisé par rapport au débit maximum alloué. L'interface utilisateur graphique permet donc à l'utilisateur d'identifier le type de service utilisé et de décider si il peut en activer un nouveau, ceci en fonction de la bande passante restante et de l'abonnement qu'il a souscrit.

Le module logiciel selon l'invention permettant l'interception du trafic, l'analyse et la visualisation des trafics en temps réel présent sur la borne au travers d'une interface utilisateur graphique associée, est particulièrement adapté aux terminaux mobiles compatibles Wifi/GPRS ou Wifi/UMTS, fonctionnant notamment avec un système d'exploitation allégé de type Symbian, Pocket PC ou Palm, etc.

## Revendications

1. Terminal (50) comprenant des moyens (51) de connexion et d'émission/réception avec au moins un réseau de télécommunication (10), des moyens pour exécuter au moins un service sur ledit réseau selon au moins un protocole de communication et une interface utilisateur graphique (52), **caractérisé en ce qu'**il comprend:
- des moyens (53) d'interception et de mémorisation des trames de données échangées sur le réseau par ledit terminal dans le cadre de services en cours d'exécution,
- des moyens (53) d'analyse desdites trames mémorisées pour en déduire des paramètres de caractérisation de la connexion dudit terminal au réseau, comprenant des moyens d'identification des différents services mis en oeuvre par le terminal et leur débit instantané associé, et
- des moyens de visualisation en temps réel desdits paramètres de caractérisation de la connexion au travers de ladite interface utilisateur graphique.

2. Terminal selon la revendication 1, **caractérisé en ce que** les moyens d'analyse des trames de données mémorisées comprennent des moyens pour distribuer les trames en fonction de leur type de protocole, temps réel ou non temps réel.

3. Terminal selon la revendication 2, **caractérisé en ce que** les moyens d'analyse des trames de données mémorisées comprennent des moyens pour comptabiliser le nombre de trames se rapportant à des services temps réel et le nombre de trames se rapportant à des services non temps réel.

4. Terminal selon la revendication 1, 2 ou 3, **caractérisé en ce que** les moyens de visualisation comprennent des moyens d'affichage des paramètres de caractérisation par service identifié.

5. Terminal selon l'une quelconque des revendications précédentes, **caractérisé en ce que** les moyens d'interception et d'analyse des trames de données comprennent un pilote logiciel NDIS de type protocole, prévu pour coopérer avec les moyens de connexion et d'émission/réception du terminal avec le réseau de télécommunication.

6. Procédé de caractérisation de la connexion d'un terminal (50) avec un réseau de télécommunication (10), ledit terminal comprenant des moyens pour exécuter au moins un service sur ledit réseau selon au moins un protocole de communication, ledit procédé étant **caractérisé en ce qu'**il comprend des étapes de:
- interception (s1) des trames de données échangées sur le réseau par ledit terminal dans le cadre de services en cours d'exécution,
- mémorisation (s1) desdites trames interceptées,
- analyse (s2, s3) desdites trames mémorisées pour en déduire des paramètres de caractérisation de la connexion comprenant l'identification des différents services mis en oeuvre par le terminal et leur débit instantané associé, et
- visualisation (s4) en temps réel desdits paramètres de caractérisation de la connexion au travers d'une interface utilisateur graphique.

7. Procédé selon la revendication 6, **caractérisé en ce que** l'étape d'analyse comporte une distribution (s2) des trames interceptées et mémorisées en fonction de leur type de protocole, temps réel ou non temps réel, et une comptabilisation (s3) du nombre de trames se rapportant à des services temps réel et du nombre de trames se rapportant à des services non temps réel.

8. Programme d'ordinateur comprenant des instructions de code de programme pour l'exécution des étapes du procédé selon la revendication 6 ou 7 destinées à être exécutées par un terminal (50) selon une des revendications 1 à 5, lorsque ledit programme est exécuté sur le terminal.

9. Programme d'ordinateur selon la revendication 8, **caractérisé en ce qu'**il est implémenté sous la forme d'un pilote NDIS de type protocole, prévu pour coopérer avec une carte réseau intégrée au terminal.

10. Support d'enregistrement lisible par un terminal selon une des revendications 1 à 5, sur lequel est enregistré le programme selon la revendication 8 ou 9.

## Patentansprüche

1. Endgerät (50), das Einrichtungen (51) zur Verbindung und zum Senden/Empfangen mit mindestens einem Fernmeldenetz (10), Einrichtungen zur Ausführung mindestens eines Diensts im Netz gemäß mindestens einem Kommunikationsprotokoll und eine grafische Benutzerschnittstelle (52) enthält, **dadurch gekennzeichnet, dass** es enthält:
- Einrichtungen (53) zum Abfangen und Speichern von vom Endgerät im Rahmen von gerade durchgeführten Diensten im Netz ausgetauschten Datenrahmen,
- Einrichtungen (53) zur Analyse der gespeicherten Rahmen, um daraus Charakterisierungsparameter der Verbindung des Endgeräts mit dem Netz abzuleiten, die Einrichtungen zur Erkennung der vom Endgerät angewendeten verschiedenen Dienste und ihrer zugeordnetem augenblicklichen Übertragungsrate enthalten, und
- Einrichtungen zur Echtzeit-Visualisierung der Charakterisierungsparameter der Verbindung über die grafische Benutzerschnittstelle.

2. Endgerät nach Anspruch 1, **dadurch gekennzeichnet, dass** die Einrichtungen zur Analyse der gespeicherten Datenrahmen Einrichtungen enthalten, um die Rahmen abhängig von ihrem Protokolltyp, Echtzeit oder Nicht-Echtzeit, zu verteilen.

3. Endgerät nach Anspruch 2, **dadurch gekennzeichnet, dass** die Einrichtungen zur Analyse der gespeicherten Datenrahmen Einrichtungen enthalten, um die Anzahl von Rahmen, die sich auf Echtzeit-Dienste beziehen, und die Anzahl von Rahmen zu erfassen, die sich auf Nicht-Echtzeit-Dienste beziehen.

4. Endgerät nach Anspruch 1, 2 oder 3, **dadurch gekennzeichnet, dass** die Visualisierungseinrichtungen Einrichtungen zur Anzeige der Charakterisierungsparameter pro erkanntem Dienst enthalten.

5. Endgerät nach einem der vorhergehenden Ansprüche, **dadurch gekennzeichnet, dass** die Einrichtungen zum Abfangen und zur Analyse der Datenrahmen einen Software-Treiber NDIS von der Art Protokoll enthalten, der vorgesehen ist, mit den Verbindungs- und Sende/Empfangs-Einrichtungen des Endgeräts mit dem Fernmeldenetz zusammenzuwirken.

6. Verfahren zur Charakterisierung der Verbindung eines Endgeräts (50) mit einem Fernmeldenetz (10), wobei das Endgerät Einrichtungen enthält, um mindestens einen Dienst in dem Netz gemäß mindestens einem Kommunikationsprotokoll auszuführen, wobei das Verfahren **dadurch gekennzeichnet ist, dass** es Schritte aufweist:
- des Abfangens (s1) der durch das Endgerät im Netz ausgetauschten Datenrahmen im Rahmen von gerade ausgeführten Diensten,
- des Speicherns (s1) der abgefangenen Rahmen,
- der Analyse (s2, s3) der gespeicherten Rahmen, um daraus Charakterisierungsparameter der Verbindung abzuleiten, die die Erkennung der verschiedenen vom Endgerät angewendeten Dienste und ihrer zugeordneten augenblicklichen Übertragungsrate enthalten, und
- der Visualisierung (s4) in Echtzeit der Charakterisierungsparameter der Verbindung über eine grafische Benutzerschnittstelle.

7. Verfahren nach Anspruch 6, **dadurch gekennzeichnet, dass** der Analyseschritt eine Verteilung (s2) der abgefangenen und gespeicherten Rahmen abhängig von ihrem Protokolltyp, Echtzeit oder Nicht-Echtzeit, und eine Erfassung (s3) der Anzahl von Rahmen, die sich auf Echtzeit-Dienste beziehen, und der Anzahl von Rahmen enthält, die sich auf Nicht-Echtzeit-Dienste beziehen.

8. Computerprogramm, das Programmcodeanweisungen für die Ausführung der Schritte des Verfahrens nach Anspruch 6 oder 7 enthält, die dazu bestimmt sind, von einem Endgerät (50) nach einem der Ansprüche 1 bis 5 ausgeführt zu werden, wenn das Programm auf dem Endgerät ausgeführt wird.

9. Computerprogramm nach Anspruch 8, **dadurch gekennzeichnet, dass** es in Form eines Treibers NDIS des Typs Protokoll implementiert wird, der vorgesehen ist, um mit einer in das Endgerät integrierten Netzkarte zusammenzuwirken.

10. Aufzeichnungsträger, der von einem Endgerät nach einem der Ansprüche 1 bis 5 lesbar ist, auf dem das Programm nach Anspruch 8 oder 9 gespeichert ist.

## Claims

1. Terminal (50) comprising means (51) for connection and transmission/reception with at least one telecommunication network (10), means for executing at least one service over said network according to at least one communication protocol and a graphical user interface (52), **characterized in that** it comprises:
- means (53) for intercepting and memorizing data frames exchanged over the network by said terminal in the context of services currently being executed;
- means (53) for analysing said memorized frames in order to deduce therefrom parameters characterizing the connection of said terminal to the network, comprising means for identifying the various services implemented by the terminal and their associated instantaneous bit rate; and
- means for viewing, in real time, said parameters characterizing the connection through said graphical user interface.

2. Terminal according to Claim 1, **characterized in that** the means for analysing the memorized data frames comprise means for distributing the frames according to their protocol type (real-time type or non-real-time type).

3. Terminal according to Claim 2, **characterized in that** the means for analysing the memorized data frames comprise means for counting the number of frames relating to real-time services and the number of frames relating to non-real-time services.

4. Terminal according to Claim 1, 2 or 3, **characterized in that** the viewing means comprise means for displaying the characterization parameters per identified service.

5. Terminal according to any one of the preceding claims, **characterized in that** the means for intercepting and analysing the data frames comprise a protocol-type NDIS software driver, provided to cooperate with the means for connection and transmission/reception of the terminal with the telecommunication network.

6. Method for characterizing the connection of a terminal (50) with a telecommunication network (10), said terminal comprising means for executing at least one service over said network according to at least one communication protocol, said method being **characterized in that** it comprises steps of:
- intercepting (s1) data frames exchanged over the network by said terminal in the context of services currently being executed;
- memorizing (s1) said intercepted frames;
- analysing (s2, s3) said memorized frames in order to deduce therefrom parameters characterizing the connection comprising the identification of the various services implemented by the terminal and their associated instantaneous bit rate; and
- viewing (s4), in real time, said parameters characterizing the connection through a graphical user interface.

7. Method according to Claim 6, **characterized in that** the analysis step includes a distribution (s2) of the intercepted and memorized frames according to their protocol type (real-time type or non-real-time type) and a count (s3) of the number of frames relating to real-time services and the number of frames relating to non-real-time services.

8. Computer program comprising program code instructions for executing the steps of the method according to Claim 6 or 7 that are intended to be executed by a terminal (50) according to one of Claims 1 to 5, when said program is executed on the terminal.

9. Computer program according to Claim 8, **characterized in that** it is implemented in the form of a protocol-type NDIS driver, provided to cooperate with a network card embedded within the terminal.

10. Recording medium able to be read by a terminal according to one of Claims 1 to 5, on which the program according to Claim 8 or 9 is recorded.
